# EUROPÄISCHE PATENTANMELDUNG

(11) **EP 2 224 561 A2**
(43) Veröffentlichungstag der Anmeldung: **01.09.2010**
(21) Anmeldenummer: 10152870.1
(22) Anmeldetag: 08.02.2010
(51) Int. Cl.: H02B 1/56

(54) **Entwärmung von Geräteeinschüben und Schaltschränken mit Heatpipes**

(30) Priorität: 27.02.2009 DE 102009010897
(71) Anmelder: SIEMENS AKTIENGESELLSCHAFT, 80333 München (DE)
(72) Erfinder: Hentschel, Andreas, 04425 Taucha (DE); Neumann, Thomas, 04318 Leipzig (DE)

(57) **Zusammenfassung**

Die Erfindung betrifft einen ersten Schaltschrank (10) mit einer Mehrzahl von im Inneren des Schaltschranks (10) angeordneten Schaltgeräten (2), deren jeweilige Anschlussstücke (3) zumindest teilweise über Anschlussleiter (4) mit Sammelleitern (5) verbunden sind, und/oder mit einer Mehrzahl von weiteren Schaltschrankkomponenten mit einer hohen lokalen Wärmeverlustleistung als Wärmequellen. Erfindungsgemäß ist zumindest ein Teil der Anschlussstücke (3) der Schaltgeräte (2), zumindest ein Teil der Anschlussleiter (4), zumindest ein Teil der Sammelleiter (5) und/oder zumindest ein Teil der weiteren Schaltschrankkomponenten zur lokalen Entwärmung jeweils mit einem ersten Ende (11) einer Heatpipe (1) wärmeleitend verbunden. Das jeweilige zweite Ende (12) der Heatpipe (1) ist mit einer Schaltschrankwand (6), mit einer Bodenplatte (7), mit einem der Sammelleiter (5) und/oder mit einer Kühleinrichtung (8) jeweils als Wärmesenke zur Einbringung der vom jeweiligen ersten Ende (11) aufgenommenen Wärme wärmeleitend verbunden.

## Beschreibung

Die Erfindung betrifft einen ersten Schaltschrank mit einer Mehrzahl von im Inneren des Schaltschranks angeordneten Schaltgeräten, deren jeweilige Anschlussstücke zumindest teilweise über Anschlussleiter mit Sammelleitern verbunden sind, und/oder mit einer Mehrzahl von weiteren Schaltschrankkomponenten mit einer hohen lokalen Wärmeverlustleistung als Wärmequellen.

Die Erfindung betrifft weiterhin einen Geräteeinschub zum Einschieben in ein Einschubfach eines zweiten Schaltschranks, wobei im Geräteinschub zumindest ein Schaltgerät und/oder zumindest eine weitere Geräteeinschubkomponente mit einer hohen lokalen Wärmeverlustleistung aufgenommen ist.

Außerdem betrifft die Erfindung einen zweiten Schaltschrank mit mehreren Einschubfächern, in welche derartige Geräteeinschübe entfernbar aufgenommen sind.

Aus der deutschen Gebrauchsmusterschrift DE 20 2006 013 674 U1 ist ein Hoch-, Mittel- oder Niederspannungsschaltschrank mit im Inneren angeordneten elektrischen Leitern offenbart, die im Betrieb stromdurchflossen sind und sich dabei erwärmen. Den elektrischen Leitern sind Heatpipes (Wärmerohr) nach dem schwerkraftbasierten Thermosyphon-Prinzip zugeordnet, deren Verdampferabschnitt mit dem jeweiligen Leiter die Wärme gut leitend verbunden ist und deren Kondensatorabschnitt sich außerhalb des Schaltschranks befinden. Die Heatpipes werden senkrecht im Schaltschrank angeordnet. Zwischen dem obenliegenden Kondensatorabschnitt und dem untenliegenden Verdampferabschnitt ist ein insbesondere flexibles Rohr aus isolierendem Material zum Transport des verdampften Fluids vom Verdampferabschnitt zum Kondensatorabschnitt und des kondensierten Fluids von dort wieder zurück nach unten zum Verdampferbereich vorgesehen.

Schaltschränke mit im Inneren angeordneten elektrischen Komponenten sowie Schaltschränke mit einschiebbaren Geräteeinschüben sind allgemein bekannt. Sie werden insbesondere bei industriellen Anlagen in vielfältiger Weise eingesetzt. Zu den betrachteten Schaltschränken gehören auch Schaltfelder, welche nicht notwendigerweise Trennwände und/oder Außenwände aufweisen müssen.

Beim Betrieb von derartigen Schaltschränken, insbesondere bei Schaltschränken zur Energieverteilung mit Stromstärken von bis zu mehreren Hundert oder Tausend Ampere, ist eine Entwärmung, das heißt eine Kühlung, zwingend erforderlich, um die im Schaltschrankinneren anfallende Wärmeverlustleistung nach außen abzuführen. Häufig fällt die Wärmeverlustleistung lokal an Heißpunkten, den sogenannten "Hotspots" an, welche eine im Vergleich zur Schrankinnentemperatur erheblich höhere Temperatur von mehr als 50°C aufweisen können. Die Hotspots können z.B. Schaltgeräte, Kontaktstellen von Stromleitern oder Stromschienen, Sicherungen, Schütze, Ventile, Lastwiderstände und dergleichen sein.

Kritisch sind insbesondere Leistungsschaltgeräte im eingeschalteten, das heißt im stromführenden Zustand. Dort können die mit der Schaltstelle verbundenen, nach außen geführten Strombahnen mit ihren zugehörigen Anschlussstücken Temperaturen von 100°C und mehr erreichen. Kritisch sind insbesondere auch Kreuzungspunkte von Stromschienen. Deren Übergangsgangswiderstand kann sich im Laufe der Zeit z.B. durch Oxidierung erhöhen, mit der Folge, dass der Kreuzungspunkt entsprechend heiß wird.

Es ist somit eine Aufgabe der Erfindung, einen ersten Schaltschrank anzugeben, bei welchem die dortigen Hotspots auf besonders einfache Weise gezielt entwärmt werden können.

Es ist eine weitere Aufgabe der Erfindung, einen Geräteeinschub mit verbesserter Entwärmung anzugeben.

Schließlich ist es eine Aufgabe der Erfindung, einen zweiten Schaltschrank anzugeben, welcher eine Reihe derartiger entfernbar aufgenommener Geräteeinschübe aufweist.

Die Aufgabe wird für den ersten Schaltschrank mit den Merkmalen des Patentanspruchs 1 gelöst. Vorteilhafte Ausführungsformen sind in den abhängigen Ansprüchen 2 bis 4 angegeben. Im Anspruch 5 ist ein Geräteeinschub mit der erfindungsgemäßen Entwärmung genannt. In den davon abhängigen Ansprüchen 6 bis 8 sind vorteilhafte Ausführungsformen des Geräteeinschubs angegeben. Im Anspruch 9 ist ein zweiter Schaltschrank angegeben, in welchem eine Reihe derartiger Geräteeinschübe entfernbar aufgenommen ist. In den Ansprüchen 10 und 11 sind vorteilhafte Ausführungsformen der zur Entwärmung eingesetzten Heatpipes angegeben.

Erfindungsgemäß ist zumindest ein Teil der Anschlussstücke der Schaltgeräte, zumindest ein Teil der Anschlussleiter, zumindest ein Teil der Sammelleiter und/oder zumindest ein Teil der weiteren Schaltschrankkomponenten zur lokalen Entwärmung jeweils mit einem ersten Ende einer Heatpipe wärmeleitend verbunden. Es ist das jeweilige zweite Ende der Heatpipe mit einer Schaltschrankwand, mit einer Bodenplatte, mit einem der Sammelleiter und/oder mit einer Kühleinrichtung jeweils als Wärmesenke zur Einbringung der vom jeweiligen ersten Ende aufgenommenen Wärme wärmeleitend verbunden. Vorzugsweise sind die Anschlussleiter und/oder die Sammelleiter Stromschienen, insbesondere aus einem Flachprofil aus Kupfer.

Der besondere Vorteil ist, dass die an den Hotspots im Schaltschrank anfallende, vergleichsweise hohe Wärmeverlustleistung gezielt mittels derartiger Heatpipes zu geeigneten, kühlen bzw. gekühlten Wärmesenken im Schaltschrank abgeführt werden kann. Es kann vorteilhaft auf eine aufwändige Leitungsführung der Heatpipe aus dem Schaltschrank heraus verzichtet werden. Zugleich ist der erfindungsgemäße Schaltschrank wegen des nicht mehr erforderlichen Anbaus des Heatpipe-Kondensators oberhalb der Schaltschrankdecke kompakter.

Nach einer Ausführungsform ist die Heatpipe eine nach dem schwerkraftbasierten Thermosyphon-Prinzip arbeitende Heatpipe. Eine derartiges Wärmerohr weist einen besonders einfachen Aufbau auf. Vorzugsweise weist das Wärmerohr ein herkömmliches Metallrohr auf, an dessen beiden Enden der Verdampfer bzw. der Kondensator angebracht sind. Die Montage eines solchen Wärmerohrs erfolgt vorzugsweise so, dass der Verdampfer an einem Hotspot angebracht ist und dass der Kondensator dazu darüberliegend im Schaltschrank angeordnet ist.

Nach einer besonderen Ausführungsform ist die Heatpipe eine nach dem Kapillarprinzip arbeitende Heatpipe. Der besondere Vorteil ist hier, dass die Entwärmung unabhängig von der Einbaulage der Heatpipes erfolgen kann. Mit "lageunabhängig" ist gemeint, dass das erste Ende der Heatpipe als Verdampferende im Vergleich zum zweiten Ende der Heatpipe als Kondensatorende höher, niedriger oder auf gleicher Höhe angeordnet sein kann. Hierzu ist lediglich das eine Ende der Heatpipe an einer "heißen" Schaltschrankkomponente als Wärmequelle anzubringen und das andere Ende an einer "kalten" Schaltschrankkomponente anzubringen.

Es kann auch eine Sammelschiene, deren Querschnitt nicht vollständig zur Stromführung benötigt wird, als Kühlkörper oder selbst als Heatpipe verwendet werden. Im letzteren Fall können eine oder mehrere Ausnehmungen, insbesondere Bohrungen, eingebracht sein, die als Heatpipe ausgebildet sind. Der Vorteil hierbei ist, dass ein bereits vorhandenes Konstruktionsmaterial, wie z.B. Flachprofile aus Kupfer oder Aluminium, eingesetzt werden können. Dadurch kann die Verlustwärme von einer heißen Wärmequelle, wie z.B. von einem Anschlussstück eines Schaltgerätes, zu einer derartigen, thermisch unkritischen Sammelschiene transportiert und über die vorhandene, vergleichsweise große Oberfläche an die dortige, kühlere Umgebung abgegeben werden.

Sind die Anschlussstücke eines Schaltgerätes z.B. als Flachprofil ausgebildet, so kann ein als Flansch ausgebildetes erstes Ende der Heatpipe mit einer entsprechend planen Flanschkühlfläche zur Aufnahme der dortigen Wärmeverlustleistung direkt auf das Flachprofil aufgesetzt und dort fixiert werden. Die aufgenommene und über das Verbindungsrohr der Heatpipe zwischen dem ersten und zweiten Ende weitertransportierte Wärme kann dann an einer Wärmesenke, wie z.B. an einer Schrankwand, wieder abgegeben werden. Es können auch besonders heiße Kontaktstellen an Kreuzungspunkten mit besonders hoher Strombelastung gezielt gekühlt werden. Die von dem ersten Ende der Heatpipe aufgenommene Wärme kann z.B. an einer kalten Stromschiene mit geringer Strombelastung am jeweiligen zweiten Ende wieder abgegeben werden. Für die Kühlung der verbleibenden Schaltschrankkomponenten mit vergleichsweise geringer Wärmeverlustleistung ist ergänzend das Anbringen eines gemeinsamen Lüfters ausreichend, welcher die Schrankinnenluft zur Vermeidung lokaler Wärmenester verwirbelt.

Die betrachteten Heatpipes bestehen typischerweise aus einem metallischen, vorzugsweise kupfernem Rohr. Das Rohr kann unterschiedliche Längen in einem Bereich von 10 cm bis mehreren Metern aufweisen. Es kann eine elektrisch isolierende Ummantelung, wie z.B. eine temperaturbeständige Kunststoffummantelung in Form eines Schlauchs aufweisen, um mögliche elektrische Kurzschlüsse bei der Verlegung und im Betrieb zu vermeiden. Weiterhin kann der Querschnitt des Rohrprofils kreisförmig, quadratisch oder rechteckig sein. Vorzugsweise weist der Querschnitt des Rohrprofils ein längliches rechteckiges Profil mit abgerundeten Ecken auf. Derartige Querschnitte sind z.B. von Heatpipes zur Kühlung von Mikroprozessoren oder Graphikprozessoren bei Computern bekannt. Das Hohlprofil ist hermetisch dicht abgeschlossen und mit einem flüssigen Arbeitsmedium, wie z.B. mit destilliertem Wasser, versehen. Über die Einstellung des Drucks, insbesondere eines Unterdrucks, im Hohlprofil kann der thermische Arbeitspunkt der Heatpipe eingestellt werden.

Alternativ kann das Verbindungsrohr zwischen dem ersten und zweiten Ende der Heatpipe flexibel ausgeführt sein. Es kann z.B. als Schlauch ausgeführt sein. Der Schlauch kann aus einem temperaturbeständigen Kunststoff hergestellt sein.

Im Inneren des Hohlprofils bzw. des Schlauchs ist im Falle einer nach dem Kapillarprinzip arbeitenden Heatpipe vorzugsweise ein Drahtgeflecht oder eine (Kupfer-)Litze eingebracht, welches bzw. welche zum Transport des in der Heatpipe kondensierten Kältemittels vom "kalten" Ende zurück zum "heißen "Ende der Heatpipe nach dem Dochtprinzip vorgesehen ist. Es kann alternativ oder zusätzlich ein Sintermaterial auf der Innenseite des Rohrs aufgebracht sein, welches Kapillare ausbildet. Weiterhin kann alternativ oder zusätzlich das Hohlprofil bzw. der Schlauch an seiner Innenseite eine Vielzahl von Kapillarrillen aufweisen, welche sich in Längsrichtung der Heatpipe erstrecken. Das im Bereich des heißen Endes der Heatpipe verdampfte Kältemittel strömt dabei in entgegengesetzter Richtung zurück zum kalten Ende der Heatpipe, um dort zu kondensieren. Vorzugsweise ist an jedem Ende der Heatpipe ein plattenförmiges Wärmekoppelelement angebracht, wie z.B. angelötet oder angeschweißt. Das jeweilige Wärmekoppelelement ist insbesondere eine massive Kupferplatte und, wie zuvor beschrieben, vorzugsweise als Flansch ausgebildet. Je nach Temperaturunterschied zwischen den beiden Enden der Heatpipe arbeitet eines der Rohrenden als Verdampfer und das andere Rohrende als Kondensator.

Nach einer vorteilhaften Ausführungsform ist zwischen dem jeweiligen ersten und/oder zweiten Ende der Heatpipe und zwischen der wärmeleitend zu kontaktierenden Schaltschrankkomponente ein elektrisch isolierendes Wärmeleitelement angeordnet. Vorzugsweise ist nur ein Wärmeleitelement pro Heatpipe vorgesehen, vorzugsweise am kalten zweiten Ende der Heatpipe. Das elektrisch isolierende Wärmeleitelement ist z.B. eine Wärmeleitfolie auf Basis eines Silikonpolymers, wie z.B. vom Typ Gap PadTM VO Ultra Soft der Fa. The Bergquist Company. Es kann eine hochelastische, keramisch verfüllte Folie vom Typ Keratherm® - Softtherm® der Fa. KERAFOL sein.

Nach einer weiteren Ausführungsform weisen die ersten und zweiten Enden der Heatpipes jeweils ein Klemmelement zum Anklemmen an die Anschlussstücke der Schaltgeräte, zum Anklemmen an die Anschlussleiter und/oder zum Anklemmen an die Sammelleiter auf. Dadurch ist eine besonders einfache, lösbare und schnelle Montage der Heatpipes im Schaltschrank bzw. im Schaltfeld möglich. Das Klemmelement kann z.B. eine Klemme, eine Klammer oder eine Spange sein.

Weiterhin ist bei einem erfindungsgemäßen Geräteeinschub zumindest ein Teil von Anschlussstücken des zumindest einen Schaltgerätes und/oder zumindest ein Teil der weiteren zumindest einen Geräteeinschubkomponente zur lokalen Entwärmung jeweils mit einem ersten Ende einer Heatpipe wärmeleitend verbunden. Es ist das jeweilige zweite Ende der Heatpipe mit einem geräteeinschubseitigen Kühlblock, mit einer Grundplatte und/oder mit einer Geräteeinschubwand jeweils als Wärmesenke wärmeleitend verbunden. Der Kühlblock ist dabei derart im Geräteeinschub angeordnet, dass nach dem Einschieben des Geräteeinschubs in das Einschubfach eine gegenüberliegende, schaltschrankseitige Kühleinrichtung wärmeleitend kontaktierbar ist. Vorzugsweise werden bei derartigen, sich typischerweise mehr in die Horizontale erstreckenden Geräteeinschüben Heatpipes eingesetzt, die nach dem Kapillarprinzip arbeiten.

Dadurch ist die Wärmeverlustleistung der Hotspots im Geräteeinschub besonders effektiv aus diesem abführbar. Auf eine aufwändige Kühlluftführung mit Luftleitblechen, Luftöffnungen und dergleichen kann vorteilhaft verzichtet werden.

Vorzugsweise ist der Kühlblock aus massivem Kupfer oder Aluminium hergestellt. Er ist insbesondere ein plattenförmiger Kühlblock. An dessen zur Innenseite des Geräteeinschubs zeigenden Kühlblockfläche sind die Wärmekoppelelemente an den zweiten Enden der Heatpipes im Geräteeinschub angebracht, wie z.B. angeschraubt. Die vom Geräteeinschub wegzeigende Kühlblockfläche ist vorzugsweise plan und kontaktiert nach dem Einschieben des Geräteeinschubs flächig eine auf die Kühlblockfläche geometrisch abgestimmte Kühlfläche der Kühleinrichtung. Letztere kann z.B. eine Kühlplatte oder ein Kühlluftrohr sein. Der Kühlblock ist insbesondere, abgesehen von der Frontplatte des Geräteeinschubs, an einer der Außenseiten des Geräteeinschubs angeordnet.

Vorzugsweise ist zur galvanischen Trennung zwischen dem jeweiligen ersten und/oder zweiten Ende der Heatpipe und zwischen der wärmeleitend zu kontaktierenden Geräteeinschubkomponente ein elektrisch isolierendes Wärmeleitelement angeordnet.

Die Aufgabe der Erfindung wird weiterhin mit einem zweiten Schaltschrank gelöst, welcher eine Reihe von Einschubfächern aufweist und in denen derartige erfindungsgemäße Geräteeinschübe entfernbar aufgenommen sind. Im zweiten Schaltschrank ist eine vorzugsweise senkrecht angeordnete Kühleinrichtung, insbesondere ein Kühlrohr, ein Kühlluftkanal oder Kühlluftschacht, angeordnet. Die Kühleinrichtung ist dabei derart im Bereich der Einschubfächer angeordnet, dass ein Kühlblock eines jeweiligen Geräteeinschubs nach dem Einschieben mit der Kühleinrichtung wärmeleitend kontaktierbar ist. Zum verbesserten Wärmeübergang bei der Kontaktierung kann eine der kontaktierenden Flächen eine der zuvor beschriebenen Wärmeleitfolien aufweisen.

Die Erfindung sowie vorteilhafte Ausführungen der Erfindung werden im Weiteren anhand der nachfolgenden Figuren näher beschrieben. Es zeigen
- FIG 1: beispielhaft einen ersten Schaltschrank gemäß der Erfindung,
- FIG 2: eine Ausführungsform des erfindungsgemäßen ersten Schaltschranks,
- FIG 3: eine Draufsicht auf einen beispielhaften Geräteein- schub gemäß der Erfindung und
- FIG 4: beispielhaft einen erfindungsgemäßen zweiten Schaltschrank mit dort eingeschobenen Geräteein- schüben gemäß FIG 3.

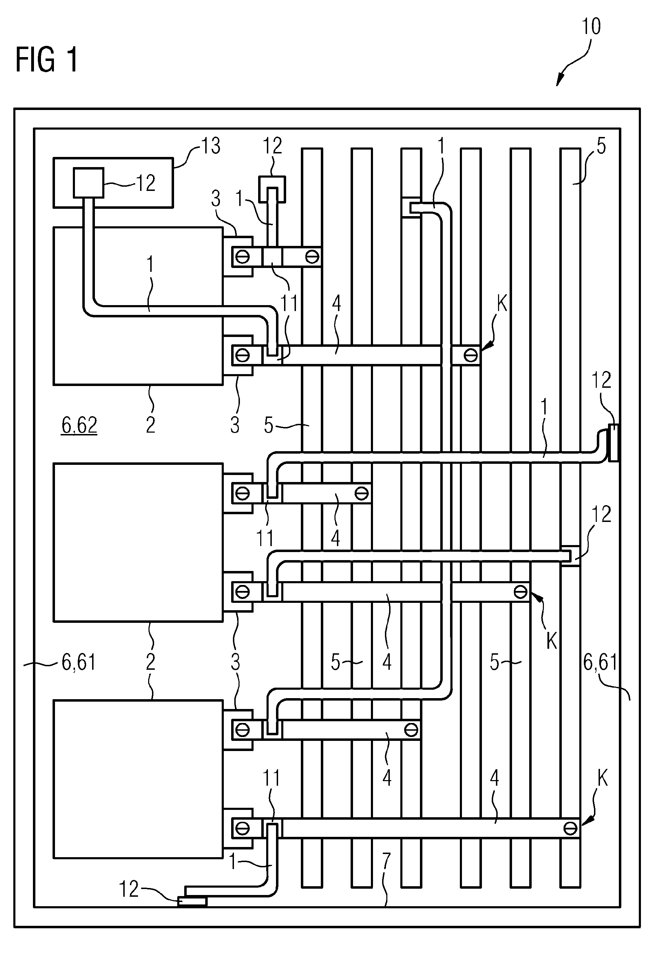

FIG 1 zeigt beispielhaft einen ersten Schaltschrank 10 gemäß der Erfindung. Der gezeigte erste Schaltschrank 10 weist als lokale Wärmequellen sechs Anschlussstücke 3 dreier Schaltgeräte 2 auf. Letztere sind über Anschlussschienen 4 mit Sammel- oder Feldschienen 5 verbunden. Mit K sind Kreuzungs- bzw. Kontaktpunkte der Schienen 4, 5 untereinander bezeichnet. Mit dem Bezugszeichen 6 sind Schaltschrankwände - hier zwei Seitenwände 61 und eine Rückwand 62 - und mit dem Bezugszeichen 7 eine Bodenplatte des Schaltschranks 10 bezeichnet. Im vorliegenden Beispiel sind sechs Heatpipes 1 zur erfindungsgemäßen lokalen Entwärmung der sechs Anschlussstücke 3 über jeweils ein erstes (Verdampfer-)Ende 11 verbunden. Die jeweiligen zweiten (Kondensator-)Enden 12 sind - in der Reihenfolge der Anschlussstücke 3 von oben nach unten betrachtet - an der Rückwand 62 des ersten Schaltschranks 10, indirekt über eine großflächige Auflageplatte 13 zum verbesserten Wärmeeintrag an dieser Rückwand 62, an der rechten Seitenwand 61, an einer Sammelschiene 5, an einer anderen Sammelschiene 5 und an der Bodenplatte 7 angebracht. Für den Fall, dass das Verbindungsrohr der Heatpipes 1 aus Metall gefertigt ist, ist zur galvanischen Trennung der jeweiligen ersten von den jeweiligen zweiten Enden 11, 12 zumindest jeweils ein elektrisch isolierenes Wärmeleitelement vorzusehen. Im Fall des zweiten Anschlussstücks 3 von unten kann wegen des gleichen vorherrschenden Spannungspotentials darauf verzichtet werden.

Im Beispiel der FIG 1 kann es sich bei den vorwiegend von unten nach oben verlaufend angeordneten Heatpipes 1 um Heatpipes 1 handeln, die nach dem schwerkraftbasierten Thermosyphon-Prinzip oder nach dem Kapillarprinzip arbeiten. Bei den vorwiegend horizontal angeordneten Heatpipes 1 handelt es sich um Heatpipes 1, die nach dem Kapillarprinzip arbeiten.

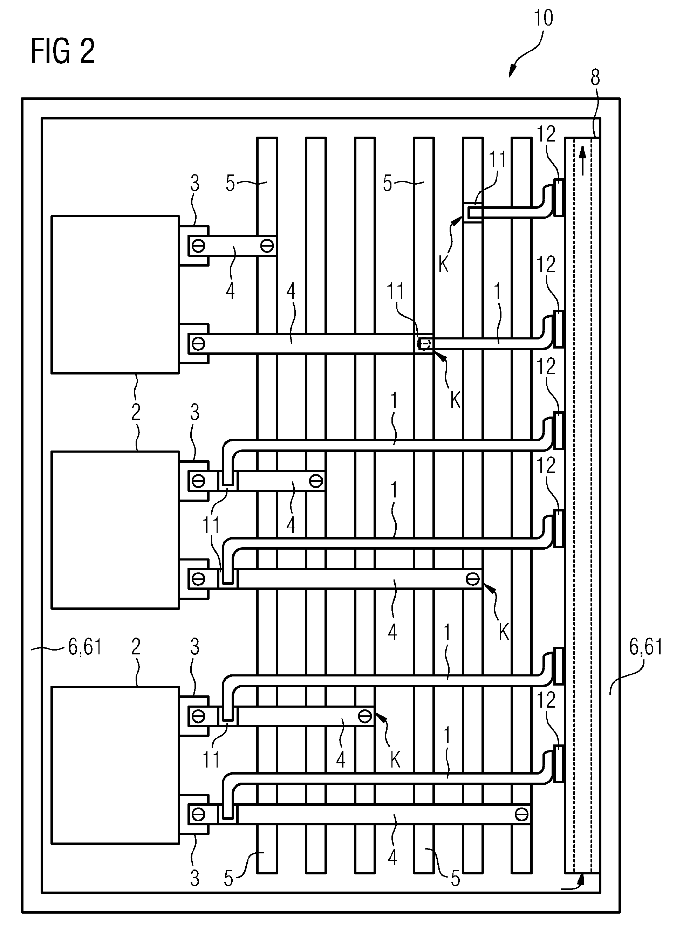

FIG 2 zeigt eine Ausführungsform des erfindungsgemäßen ersten Schaltschranks 10. Im Vergleich zur vorherigen FIG 1 sind beispielhaft nur die unteren vier Anschlussstücke 3 gemeinsam an eine als Kühlluftkanal ausgebildete Kühreinrichtung 8 wärmeleitend angebracht. Zudem werden hier zwei besonders "heiße" Kreuzungspunkte K der Schienen 4, 5 im oberen Teil des Schaltschranks 10 über jeweils eine Heatpipe 1 gekühlt. Die durch diese aufgenommene Wärme wird gleichfalls an den Kühlluftkanal 8 abgegeben. Der gezeigte Kühlluftkanal 8 kann wegen des Kamineffekts eigenbelüftet oder zwangsbelüftet sein. Er kann zudem, wie in FIG 2 gezeigt, mit der rechten Seitenwand 61 zur verbesserten Entwärmung wärmeleitend verbunden sein.

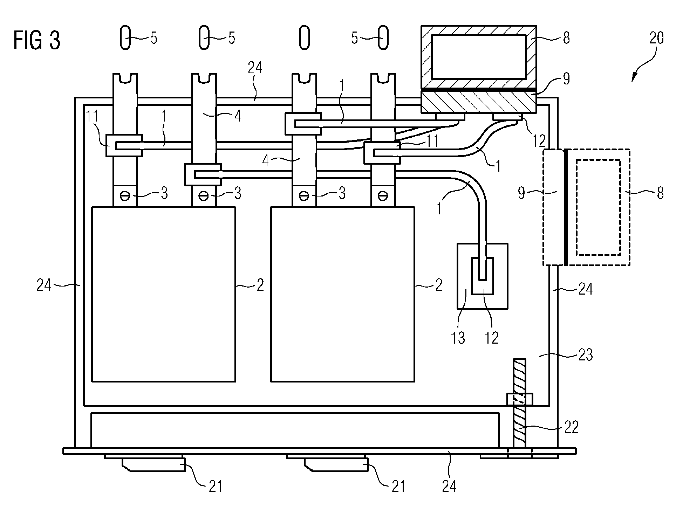

FIG 3 zeigt eine Draufsicht auf einen beispielhaften Geräteeinschub 20 gemäß der Erfindung. Der Geräteeinschub 20 befindet sich im eingeschobenen Zustand und weist beispielhaft eine über einen manuell betätigbaren Verfahrantrieb 22 verfahrbare Grundplatte 23 auf. Auf letzterer sind zwei Leistungsschaltgeräte 2 mit jeweils zwei Anschlussstücken 3 angeordnet. Die vier Anschlussstücke 3 sind jeweils mit einer der Anschlussschienen 4 verbunden, welche bei Betätigung des Verfahrantriebs 22 mit schaltschrankseitigen Feldschienen 5 kontaktieren können. Es können auch weitere Geräteeinschubkomponenten (nicht dargestellt) mit jeweils einer hohen lokalen Wärmeverlustleistung, wie z.B. Sicherungen, Lastwiderstände und dergleichen, im Geräteeinschub aufgenommen sein. Mit dem Bezugszeichen 21 sind zwei Handhaben zum manuellen Ein- und Ausschalten der beiden Schaltgeräte 2 bezeichnet.

Im vorliegenden Bespiel sind drei Anschlussstücke 3 der zwei Schaltgeräte 2 jeweils über eine Heatpipe 1 zur erfindungsgemäßen lokalen Entwärmung mit einem geräteeinschubseitigen Kühlblock 9 verbunden. Die gezeigten Heatpipes 1 arbeiten vorzugsweise nach dem Kapillar-Prinzip. Die Verbindungsrohre dieser Heatpipes 1 sind dabei elastisch bzw. in gewissen Grenzen elastisch ausgeführt, um die relative Bewegung zwischen der Grundplatte 23 und dem Kühlblock 9 auszugleichen. Das vierte Anschlussstück 3 ist schließlich zur Entwärmung über eine weitere Heatpipe 1 mit der Grundplatte 23 des Geräteeinschubs 20 verbunden. Mit dem Bezugszeichen 13 ist eine dazwischenliegende Auflageplatte zur verbesserten Wärmeübertragung bezeichnet.

Wie die FIG 3 weiter zeigt, ist der vorzugsweise aus Kupfer hergestellte Kühlblock 9 derart im Geräteeinschub 20 angeordet, dass nach dem Einschieben des Geräteeinschubs 20 in das Einschubfach eines zugehörigen, hier nicht weiter gezeigten zweiten Schaltschranks eine gegenüberliegende, schalt oder schaltfeldseitige Kühleinrichtung 8 wärmeleitend kontaktierbar ist. Im vorliegenden Beispiel ist die Kühleinrichtung 8 ein Kühlluftrohr mit rechteckigem Querschnitt. Die dem Kühlblock 9 zugewandte Kühlfläche ist geometrisch auf die Außenfläche des Kühlblocks 9 abgestimmt. Die wärmetechnischen Kontaktierung erfolgt im vorliegenden Fall in Einschubrichtung, also in der Blattebene der FIG 3 von unten nach oben.

Alternativ können die Kühleinrichtung 8 und der Kühlblock 9 (gestrichelt dargestellt) seitlich angeordnet sein (siehe gestrichelte Darstellung). Dabei fährt der Kühlblock 9 beim Einschieben entlang der zu kontaktierenden Kühlfläche der Kühleinrichtung 8. Ergänzend wird angemerkt, dass der Kühlblock 9 auch im Bereich der oberen Abdeckung oder im Bereich der Grund- bzw. Bodenplatte 23 des Geräteeinschubs 20 angeordnet sein kann.

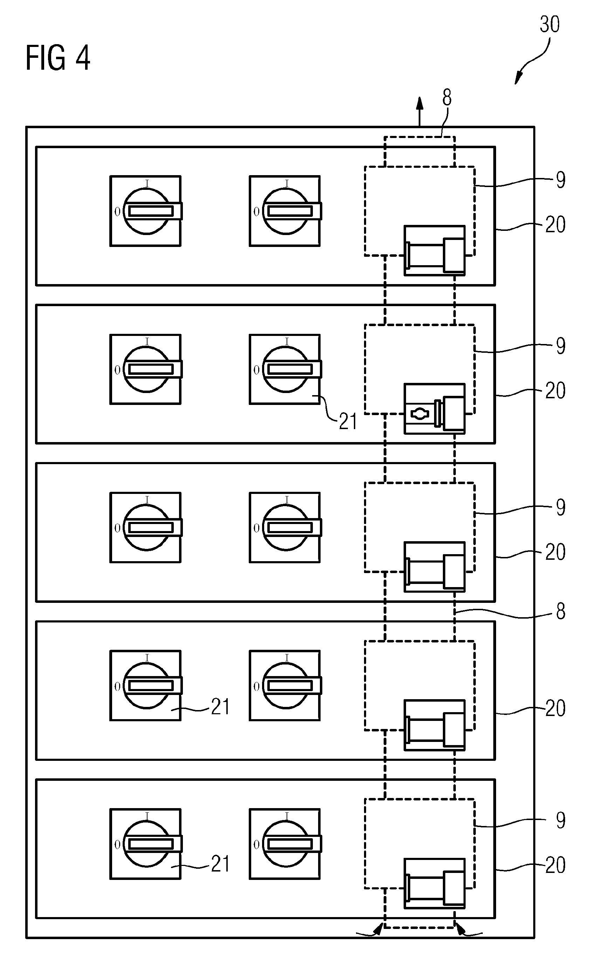

FIG 4 zeigt beispielhaft einen erfindungsgemäßen zweiten Schaltschrank 30 mit fünf Einschubfächer mit fünf eingeschobenen erfindungsgemäßen Geräteeinschüben 20. In dieser Darstellung ist erkennbar, wie die jeweiligen im Bereich der Rückseite angeordneten Kühlblöcke 9 mit einer dahinterliegenden Kühleinrichtung 8 in Form eines im zweiten Schaltschrank 30 senkrecht angeordneten Kühlluftkanals zur Entwärmung zusammenwirken.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Zusammenfassend betrifft die Erfindung einen ersten Schaltschrank 10 mit einer Mehrzahl von im Inneren des Schaltschranks 10 angeordneten Schaltgeräten 2, deren jeweilige Anschlussstücke 3 zumindest teilweise über Anschlussleiter 4 mit Sammelleitern 5 verbunden sind, und/oder mit einer Mehrzahl von weiteren Schaltschrankkomponenten mit einer hohen lokalen Wärmeverlustleistung als Wärmequellen. Erfindungsgemäß ist zumindest ein Teil der Anschlussstücke 3 der Schaltgeräte 2, zumindest ein Teil der Anschlussleiter 4, zumindest ein Teil der Sammelleiter 5 und/oder zumindest ein Teil der weiteren Schaltschrankkomponenten zur lokalen Entwärmung jeweils mit einem ersten Ende 11 einer nach dem Kapillarprinzip arbeitenden Heatpipe 1 wärmeleitend verbunden. Das jeweilige zweite Ende 12 der Heatpipe 1 ist mit einer Schaltschrankwand 6, mit einer Bodenplatte 7, mit einem der Sammelleiter 5 und/oder mit einer Kühleinrichtung 8 jeweils als Wärmesenke zur Einbringung der vom jeweiligen ersten Ende 11 aufgenommenen Wärme wärmeleitend verbunden.

### Bezugszeichenliste

- 1: Heatpipe, Wärmerohr
- 2: Schaltgerät
- 3: Anschlussstück
- 4: Anschlussleiter, Anschlussschiene
- 5: Sammelleiter, Sammelschiene, Feldschiene
- 6: Schaltschrankwand
- 7: Bodenplatte
- 8: Kühleinrichtung, Kühlluftkanal
- 9: Kühlblock
- 10: erster Schaltschrank, Schaltfeld
- 11, 12: Enden der Heatpipe
- 13: Anschlussplatte
- 20: Geräteeinschub
- 21: Handhabe
- 22: Verfahrantrieb
- 23: Grundplatte
- 24: Seitenwand
- 30: zweiter Schaltschrank, Schaltfeld

- K: Kontaktpunkt, Kreuzungspunkt

## Patentansprüche

1. Erster Schaltschrank (10) mit einer Mehrzahl von im Inneren des Schaltschranks (10) angeordneten Schaltgeräten (2), deren jeweilige Anschlussstücke (3) zumindest teilweise über Anschlussleiter (4) mit Sammelleitern (5) verbunden sind, und/oder mit einer Mehrzahl von weiteren Schaltschrankkomponenten mit einer hohen lokalen Wärmeverlustleistung, wobei
**dadurch gekennzeichnet,**
- **dass** zumindest ein Teil der Anschlussstücke (3) der Schaltgeräte (2), zumindest ein Teil der Anschlussleiter (4), zumindest ein Teil der Sammelleiter (5) und/oder zumindest ein Teil der weiteren Schaltschrankkomponenten zur lokalen Entwärmung jeweils mit einem ersten Ende (11) einer Heatpipe (1) wärmeleitend verbunden ist und
- **dass** das jeweilige zweite Ende (12) der Heatpipe (1) mit einer Schaltschrankwand (6), mit einer Bodenplatte (7), mit einem der Sammelleiter (5) und/oder mit einer Kühleinrichtung (8) jeweils als Wärmesenke zur Einbringung der vom jeweiligen ersten Ende (11) aufgenommenen Wärme wärmeleitend verbunden ist.

2. Erster Schaltschrank (10) nach Anspruch 1,
**dadurch gekennzeichnet,**
**dass** zwischen dem jeweiligen ersten und/oder zweiten Ende (11, 12) der Heatpipe (1) und zwischen der wärmeleitend zu kontaktierenden Schaltschrankkomponente (3 - 8) ein elektrisch isolierendes Wärmeleitelement angeordnet ist.

3. Erster Schaltschrank (10) nach Anspruch 1 oder 2,
**dadurch gekennzeichnet,**
**dass** die Anschlussleiter (4) und/oder die Sammelleiter (5) Stromschienen sind.

4. Erster Schaltschrank (10) nach einem der Ansprüche 1 bis 3, **dadurch gekennzeichnet,**
**dass** die ersten und zweiten Enden (11, 12) der Heatpipes (1) jeweils ein Klemmelement zum Anklemmen an die Anschlussstücke (3) der Schaltgeräte (2), zum Anklemmen an die Anschlussleiter (4) und/oder zum Anklemmen an die Sammelleiter (5) aufweist.

5. Geräteeinschub (20) zum Einschieben in ein Einschubfach eines zweiten Schaltschranks (30), wobei im Geräteinschub (20) zumindest ein Schaltgerät (2) und/oder zumindest eine weitere Geräteeinschubkomponente mit einer hohen lokalen Wärmeverlustleistung aufgenommen ist,
**dadurch gekennzeichnet,**
- **dass** zumindest ein Teil von Anschlussstücken (3) des zumindest einen Schaltgerätes (2) und/oder zumindest ein Teil der weiteren zumindest einen Geräteeinschubkomponente zur lokalen Entwärmung jeweils mit einem ersten Ende (11) einer Heatpipe (1) wärmeleitend verbunden sind und
- **dass** das jeweilige zweite Ende (12) der Heatpipe (1) mit einem geräteeinschubseitigen Kühlblock (9), mit einer Grundplatte (23) und/oder mit einer Geräteeinschubwand (24) jeweils als Wärmesenke wärmeleitend verbunden ist, wobei der Kühlblock (9) derart im Geräteeinschub (20) angeordnet ist, dass nach dem Einschieben des Geräteeinschubs (20) in das Einschubfach eine gegenüberliegende, schaltschrankseitige Kühleinrichtung (8) wärmeleitend kontaktierbar ist.

6. Geräteeinschub (20) nach Anspruch 5,
**dadurch gekennzeichnet,**
**dass** der Kühlblock (9) aus massivem Kupfer oder Aluminium hergestellt ist.

7. Geräteeinschub (20) nach Anspruch 5 oder 6,
**dadurch gekennzeichnet,**
**dass** zwischen dem jeweiligen ersten und/oder zweiten Ende (11, 12) der Heatpipe (1) und zwischen der wärmeleitend zu kontaktierenden Geräteeinschubkomponente (3, 9, 23, 24) ein elektrisch isolierendes Wärmeleitelement angeordnet ist.

8. Geräteeinschub (20) nach einem der Ansprüche 5 bis 7,
**dadurch gekennzeichnet,**
**dass** die ersten und zweiten Enden (11, 12) der Heatpipes (1) jeweils ein Klemmelement zum Anklemmen an ein Anschlussstück (3) des Schaltgerätes (2) und/oder zum Anklemmen an eine weitere Geräteeinschubkomponente aufweist.

9. Zweiter Schaltschrank (30) mit einer Reihe von Einschubfächern, in welche Geräteeinschübe (20) nach einem der Ansprüche 5 bis 8 entfernbar aufgenommen sind, wobei im zweiten Schaltschrank (30) eine vorzugsweise senkrecht angeordnete Kühleinrichtung (8) angeordnet ist und wobei die Kühleinrichtung (8) derart im Bereich der Einschubfächer angeordnet ist, dass ein Kühlblock (9) eines jeweiligen Geräteeinschubs (20) nach dem Einschieben mit der Kühleinrichtung (8) wärmeleitend kontaktierbar ist.

10. Vorrichtung (10, 20, 30) nach einem der Ansprüche 1 bis 9, **dadurch gekennzeichnet,**
**dass** die Heatpipe (1) eine nach dem schwerkraftbasierten Thermosyphon-Prinzip arbeitende Heatpipe ist.

11. Vorrichtung (10, 20, 30) nach einem der Ansprüche 1 bis 9, **dadurch gekennzeichnet,**
**dass** die Heatpipe (1) eine nach dem Kapillarprinzip arbeitende Heatpipe ist.
